# EUROPÄISCHE PATENTANMELDUNG

(11) **EP 1 762 289 A2**
(43) Veröffentlichungstag der Anmeldung: **14.03.2007**
(21) Anmeldenummer: 06016503.2
(22) Anmeldetag: 08.08.2006
(51) Int. Cl.: B01D 21/24, B01D 21/20, E03F 5/14, F16L 27/093, E03F 5/04, E03F 1/00

(54) **Sedimentationsanlage**

(30) Priorität: 08.09.2005 DE 202005014237 U
(71) Anmelder: REHAU AG + Co, 95111 Rehau (DE)
(72) Erfinder: Baumann, Warnfried, 91315 Höchstadt (DE)

(57) **Zusammenfassung**

Die Erfindung betrifft eine Sedimentationsanlage zum Absetzen von in Flüssigkeiten enthaltenen, absetzbaren Stoffen, umfassend einen vorzugsweise unterirdisch zu verlegenden Sedimentationskörper, der einen Absetzraum definiert, zumindest eine Zulaufeinrichtung, durch welche eine Flüssigkeit in den Absetzraum einleitbar ist und zumindest eine Ablaufeinrichtung, durch welche die Flüssigkeit wieder aus dem Absetzraum ausleitbar ist.

Der Erfindung liegt die Aufgabe zugrunde, herkömmliche Sedimentationsanlagen hinsichtlich ihrer Einsetzbarkeit und Anwendbarkeit zu verbessern und insbesondere eine verbesserte Sedimentationsanlage bereitzustellen, die einfacher und flexibler mit vor- und nachgeschalteten Anlagen verbindbar ist.

Erfindungsgemäß wird dies dadurch gelöst, dass die Zulaufeinrichtung und/oder die Ablaufeinrichtung gegenüber dem Sedimentationskörper bewegbar ist.

## Beschreibung

Die Erfindung betrifft eine Sedimentationsanlage zum Absetzen von in Flüssigkeiten enthaltenen, absetzbaren Stoffen, umfassend einen vorzugsweise unterirdisch zu verlegenden Sedimentationskörper, der einen Absetzraum definiert, zumindest eine Zulaufeinrichtung, durch welche eine Flüssigkeit in den Absetzraum einleitbar ist, und zumindest eine Ablaufeinrichtung, durch welche die Flüssigkeit wieder aus dem Absetzraum ausleitbar ist.

Derartige Sedimentationsanlagen dienen dem Schutz von Versickerungsanlagen vor Verschmutzung und Verstopfung durch die absetzbaren Stoffe beim Einleiten von Niederschlagswasser.

Beispielsweise stellt die Firma Mall GmbH, Donaueschingen, eine gattungsgemäße Sedimentationsanlage bereit, die einen Stahlbetonbehälter, ein Zentralrohr mit Ablaufrohr, einen Rohranschluss für den Zulauf mit Mehrfachlippendichtung und eine Zulaufgarnitur aus Edelstahl umfasst. Eine solche Sedimentationsanlage ist z. B. zwischen einem Regenwasserablauf von Fahrbahnoberflächen und einer Versickerungsanlage anschließbar.

Beim Installieren der Sedimentationsanlage muss darauf geachtet werden, dass die Zulaufeinrichtung und die Ablaufeinrichtung leicht zugänglich sind, um sowohl mit vorgeschalteten Anlagen, wie z.B. dem Regenablauf, als auch mit nachgeschalteten Anlagen, wie z.B. der Versickerungsanlage, verbunden werden zu können. Dadurch wird eine bestimmte Ausrichtung der Sedimentationsanlage am Einsatzort vorgegeben, was die Auswahlmöglichkeiten bzgl. der Anordnung der Sedimentationsanlage stark einschränkt und insbesondere bei knappem Bauraum zu Problemen führt. So sind oftmals umständliche Leitungsanordnungen erforderlich, um die Zulauf- und Ablaufeinrichtungen der Sedimentationsanlage an die vor- und nachgeschalteten Anlagen anzuschließen.

Um dieses Problem zu lösen, liegt der Erfindung die Aufgabe zugrunde, herkömmliche Sedimentationsanlagen hinsichtlich ihrer Einsetzbarkeit und Anwendbarkeit zu verbessern und insbesondere eine verbesserte Sedimentationsanlage bereitzustellen, die einfacher und flexibler mit vor- und nachgeschalteten Anlagen verbindbar ist.

Zur Lösung dieser Aufgabe stellt die Erfindung eine Sedimentationsanlage der eingangs genannten Art bereit, die dadurch gekennzeichnet ist, dass die Zulaufeinrichtung und/oder die Ablaufeinrichtung gegenüber dem Sedimentationskörper bewegbar ist. Wenn die Zulaufeinrichtung und/oder die Ablaufeinrichtung gegenüber dem Sedimentationskörper bewegbar ist, kann der großvolumige Sedimentationskörper im Prinzip ohne Einschränkungen unterirdisch verlegt werden, wobei die Zulaufeinrichtung und/oder die Ablaufeinrichtung, den jeweiligen Bedürfnissen entsprechend, auf einen vorhandenen Anschluss einer vor- bzw. nachgeschalteten Anlage ausgerichtet werden kann.

In einer bevorzugten Weiterbildung der Erfindung ist die Zulaufeinrichtung und/oder die Ablaufeinrichtung drehbar am Sedimentationskörper angeordnet. Eine derartige Ausführung kann mit verhältnismäßig einfachen technischen Mitteln bewerkstelligt werden.

Dabei ist es von Vorteil, wenn die Zulaufeinrichtung und/oder die Ablaufeinrichtung um 360° drehbar ist.

Ebenso ist es von Vorteil, wenn die Drehachsen der Zulaufeinrichtung und der Ablaufeinrichtung im Wesentlichen parallel zueinander verlaufen. Dadurch können die Zulauf- und Ablaufeinrichtungen auf Anschlüsse in einer Ebene bzw. in zwei zueinander parallelen Ebenen ausgerichtet werden.

Bezüglich des Aufbaus der Sedimentationsanlage ist es von Vorteil, wenn der Sedimentationskörper zumindest einen, den Absetzraum umgebenden, Absetzabschnitt und zumindest einen gegenüber dem Absetzabschnitt nach außen hervorstehenden Aufsatz aufweist. Über den Aufsatz kann der Absetzraum von außen zugänglich gemacht werden. Der Aufsatz ist demnach dafür prädestiniert, um einerseits als Einlauf- oder Ablaufsschacht für die zu säubernde bzw. gesäuberte Flüssigkeit, und andererseits als Wartungsschacht z.B. zur Säuberung des Absetzraums zu dienen.

Es erweist sich als vorteilhaft, wenn der Aufsatz in den Absetzraum hineinragt. Einerseits lässt sich dadurch die Flüssigkeit beim Einleiten in den Absetzraum weitgehend beruhigen, um ein Aufwirbeln bereits abgesetzter Sedimente nach Möglichkeit zu unterbinden, andererseits lässt sich ein Reinigungsgerät, wie z.B. ein Saugkopf durch den Aufsatz zielgerichtet auf einen bevorzugten Absetzbereich hinführen, so dass die Sedimentationsanlage infolge dessen einfacher und besser gereinigt werden kann.

In einer bevorzugten Weiterbildung der Erfindung ist die Zulaufeinrichtung drehbar an einem ersten Aufsatz des Sedimentationskörpers angeordnet. Weil der Aufsatz gegenüber dem Absetzabschnitt nach außen hervorsteht, ist die Zulaufeinrichtung von nahezu allen Umgebungsrichtungen besser zugänglich.

Analog dazu ist es von Vorteil, wenn die Ablaufeinrichtung drehbar an einem zweiten Aufsatz des Sedimentationskörpers angeordnet ist. Natürlich können sowohl die Zulaufeinrichtung als auch die Ablaufeinrichtung gemeinsam an einem Aufsatz angeordnet sein, wobei eine oder beide Einrichtungen drehbar sein können.

Weiterhin ist es von Vorteil, wenn der Sedimentationskörper zumindest eine erste Tauchwand aufweist, die sich von einem Boden des Absetzraumes in den Absetzraum hinein erstreckt. Eine sich vom Boden des Absetzraumes in den Absetzraum hinein erstreckende Tauchwand wird im Rahmen dieser Beschreibung als erste Tauchwand bezeichnet. Diese dient dazu, die in den Absetzraum eingeleitete Flüssigkeit zu beruhigen und ein diskretes Abscheidevolumen zu schaffen, in welchem sich ein absetzbarer Stoff absetzen kann, ohne durch nachströmende Flüssigkeit wieder aufgewirbelt zu werden. Vorzugsweise ist die erste Tauchwand in der Nähe einer Flüssigkeitseintrittsöffnung angeordnet, durch welche die Flüssigkeit in den Absetzraum eintritt. Natürlich können auch mehrere, d.h. unbegrenzt viele, erste Tauchwände zur Bildung vieler diskreter Abscheidevolumen eingesetzt werden.

Es erweist sich dabei von Vorteil, wenn eine Oberkante der ersten Tauchwand auf einer Höhe von vorzugsweise 10% bis 30%, bevorzugt 20%, der Innenhöhe des Absetzraumes liegt.

Es erweist sich auch als vorteilhaft, wenn der Sedimentationskörper zumindest eine zweite Tauchwand aufweist, die sich von einer Decke des Absetzraumes in den Absetzraum hinein erstreckt.

Eine sich von der Decke des Absetzraumes in den Absetzraum hinein erstreckende Tauchwand wird im Rahmen dieser Beschreibung als zweite Tauchwand bezeichnet. Diese dient auch dazu, die in den Absetzraum eingeleitete Flüssigkeit zu beruhigen und zu verhindern, dass aufgewirbelte, absetzbare Stoffe unmittelbar in die Ablaufeinrichtung gelangen und aus dem Absetzraum ausgeleitet werden. Vorzugsweise ist die zweite Tauchwand in der Nähe einer Flüssigkeitsaustrittsöffnung angeordnet, durch welche die Flüssigkeit aus dem Absetzraum austritt. Natürlich können auch mehrere, d.h. unbegrenzt viele, zweite Tauchwände eingesetzt werden.

Es erweist sich dabei von Vorteil, wenn eine Unterkante der zweiten Tauchwand auf einer Höhe von vorzugsweise 40% bis 60%, bevorzugt 50%, der Innenhöhe des Absetzraumes liegt.

In der Sedimentationsanlage setzen sich die in der Flüssigkeit enthaltenen, absetzbaren Schwebstoffe durch den Einfluss der Schwerkraft nach gewisser Zeit am Boden des Absetzraumes ab. Es erweist sich daher als hilfreich, wenn sich die erste Tauchwand und/oder die zweite Tauchwand im Wesentlichen senkrecht zu einer Sohle des Absetzraumes, d.h. vertikal, in den Absetzraum hinein erstreckt. Die Gefahr, dass sich im Absetzraum Stauräume bilden, in welchen sich Sedimente bevorzugt ansammeln, die aber aufgrund von schräg angeordneten Tauchwänden schwer erreichbar und schwer zu reinigen sind, wird dadurch verringert.

Der Einsatz der Tauchwände erweist sich am wirkungsvollsten, wenn die erste Tauchwand und/oder die zweite Tauchwand in einer Fließrichtung der Flüssigkeit durch die Sedimentationsanlage zwischen einer Flüssigkeitseintrittsöffnung, durch welche die Flüssigkeit in den Absetzraum eintritt und einer Flüssigkeitsaustrittsöffnung, durch welche die Flüssigkeit aus dem Absetzraum austritt, angeordnet ist.

In einer bevorzugten Ausführungsform der Erfindung weist der Absetzabschnitt eine rohrförmige Struktur auf. Derartige Strukturen besitzen auch bei großem Volumina ein geringes Gewicht und bieten trotzdem ein erforderliches Maß an Steifigkeit und Festigkeit.

In einer besonders bevorzugten Ausführungsform der Erfindung weist der Absetzabschnitt ein Wellrohr auf.

Wenn der zumindest eine Aufsatz eine rohrförmige Struktur aufweist, kann die Zulaufeinrichtung und/oder die Ablaufeinrichtung besonders einfach am Außenumfang des Aufsatzes drehbar angeordnet werden und besonders einfach gegenüber dem Aufsatz abgedichtet werden.

In einer bevorzugten Weiterbildung der Erfindung beträgt eine Innenquerschnittsfläche des Aufsatzes vorzugsweise 10% bis 30%, bevorzugt 20%, einer Innenquerschnittsfläche des Absetzabschnitts. Daraus ergibt sich ein besonders vorteilhaftes Verhältnis zwischen einer maximalen Flüssigkeitszulaufmenge bzw. -ablaufmenge und einem Stauvolumen der Sedimentationsanlage.

Dabei erweist es sich als vorteilhaft, wenn ein Durchmesser eines den Aufsatz bildenden Rohres vorzugsweise 25% bis 50%, bevorzugt 40%, des Durchmessers eines den Absetzabschnitt bildenden Rohres beträgt.

Um die im Absetzraum vorhandene Luft, die beim Einleiten von Flüssigkeit in den Absetzraum verdrängt wird, entweichen zu lassen, ist es von Vorteil, wenn die Sedimentationsanlage eine Entlüftungsleitung umfasst, die sich, ausgehend von einer Entlüftungsöffnung, in der zweiten Tauchwand im Wesentlichen innerhalb des zweiten Aufsatzes erstreckt.

Um ohne großen Fertigungsaufwand eine einfache Möglichkeit der Entlüftung des Absetzraums zu schaffen, erweist es sich als hilfreich, wenn im ersten Aufsatz unterhalb der Decke des Absetzraumes eine Öffnung vorgesehen ist. Auf eine gesonderte Entlüftungsleitung kann dann verzichtet werden.

Zur Vereinfachung der Herstellbarkeit und zur Verringerung der Herstellungskosten erweist es sich als hilfreich, wenn der Sedimentationskörper im Wesentlichen aus Kunststoff, vorzugsweise Polyolefin, bevorzugt Polypropylen oder Polyethylen, besteht.

Eine besonders bevorzugte Ausführungsform der Erfindung betrifft einen Bausatz für eine erfindungsgemäße Sedimentationsanlage nach einer der zuvor beschriebenen Ausführungen und Weiterbildungen, umfassend ein Kopfteil, ein Endteil und ein Mittelteil, welches mit dem Kopfteil und dem Endteil verbindbar ist, um den Sedimentationskörper zu bilden. Dadurch ist die Sedimentationsanlage leichter transportierbar und bei nur geringem Montageaufwand leicht an individuellen Bedürfnisse anpassbar.

Ein idealer, modularer Aufbau der Sedimentationsanlage kann dadurch bewerkstelligt werden, dass die Zulaufeinrichtung dem Kopfteil zugeordnet ist und die Ablaufeinrichtung dem Endteil zugeordnet ist.

### Kurze Beschreibung der Zeichnungen

- Figur 1: zeigt eine Querschnittsansicht einer Sedimentationsanlage gemäß der Erfindung.
- Figur 2: zeigt eine Ansicht des Schnitts II - II der Sedimentationsanlage aus Figur 1.

### Detaillierte Beschreibung eines bevorzugten Ausführungsbeispiels

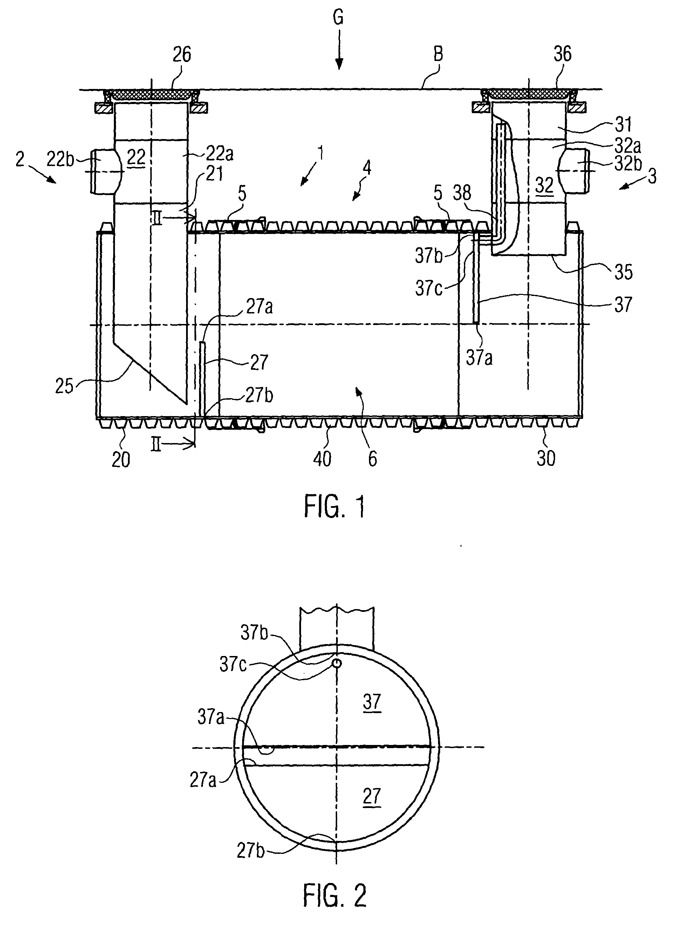

Nachstehend wird ein bevorzugtes Ausführungsbeispiel der Erfindung mit Bezug auf die Figuren 1 und 2 beschrieben.

In der nachfolgenden Beschreibung werden positionsangebende Begriffe wie "oben", "unten", "links", "rechts" oder dergleichen verwendet, die dem besseren Verständnis der Erfindungsbeschreibung dienen. Diese positionsangebenden Bezeichnungen sind jeweils nur im Bezug auf die jeweilige Darstellung in den Zeichnungen zu verstehen und haben darüber hinaus keinen bindenden Charakter.

Figuren 1 und 2 zeigen eine Sedimentationsanlage 1 zum Absetzen von in Flüssigkeiten enthaltenen, absetzbaren Stoffen, umfassend einen vorzugsweise unterirdisch zu verlegenden Sedimentationskörper 2, 3, 4, der einen Absetzraum 6 definiert, zumindest eine Zulaufeinrichtung 22, durch welche eine Flüssigkeit in den Absetzraum 6 einleitbar ist, und zumindest eine Ablaufeinrichtung 32, durch welche die Flüssigkeit wieder aus dem Absetzraum 6 ausleitbar ist. Erfindungsgemäß ist entweder die Zulaufeinrichtung 22 oder die Ablaufeinrichtung 32, oder sowohl die Zulaufeinrichtung 22 als auch die Ablaufeinrichtung 32 gegenüber dem Sedimentationskörper 2, 3, 4 bewegbar.

Der Sedimentationskörper 2, 3, 4 umfasst einen Absetzabschnitt 20, 30, 40, der in seinem Inneren den Absetzraum 6 bildet und diesen umgibt. Der Absetzabschnitt 20, 30, 40 umfasst im Wesentlichen ein an beiden axialen Enden verschlossenes Wellrohr mit einem Innendurchmesser von in etwa 1.030 mm. Der Absetzabschnitt 20, 30, 40 kann allerdings jede beliebige Form aufweisen und aus beliebigen Materialien hergestellt werden. Als Materialien eignen sich insbesondere Kunststoffe, vorzugsweise Polyolefine, d.h. Polypropylen (PP) und Polyethylen (PE). Vorzugsweise umfasst der Absetzabschnitt 20, 30, 40 aus Festigkeitsgründen ein Wellrohr aus Kunststoff. Bei bestimmungsgemäßem Einbau der Sedimentationsanlage 1, wie in Figur 1 gezeigt wird, verläuft die Mittelachse des den Absetzabschnitt 20, 30, 40 bildenden Wellrohres horizontal, d.h. senkrecht zur Wirkungsrichtung der Gewichtskraft G.

An den Absetzabschnitt 20, 30, 40 sind zwei rohrförmige Aufsätze 21, 31 angeschlossen, welche die Wand des Absetzabschnitts 20, 30, 40 durchdringen und nach außen über den Absetzabschnitt 20, 30, 40 hervorstehen. Als Aufsätze 21, 31 werden vorzugsweise Domschächte DN 400 aus Kunststoff mit einem Außendurchmesser von 400 mm verwendet, deren Längsachsen vorzugsweise senkrecht zur Längsachse des rohrförmigen Absetzabschnitts 20, 30, 40 angeordnet sind und sich vorzugsweise parallel zueinander erstrecken. Die Aufsätze 21, 31 durchdringen eine Wand des Absetzabschnitts 20, 30, 40 und sind vorzugsweise stoffschlüssig, z.B. durch Verschweißung, fest und fluiddicht mit dem Absetzabschnitt 20, 30, 40 verbunden. Dazu sind die Aufsätze 21, 31 vorzugsweise aus identischem Material wie der Absetzabschnitt 20, 30, 40 gefertigt. Ein nach außen über den Absetzabschnitt 20 hervorstehendes Ende jedes Domschachts 21, 31 ist in einem Einbauzustand mit einer Schachtabdeckung 26, 36 verschlossen. Über die Aufsätze 21, 31 ist der Absetzraum 6 z.B. zur Wartung und Reinigung von außen zugänglich. Dazu können die Schachtabdeckungen 26, 36 entfernt werden.

Der erste Aufsatz 21 ragt, wie in Figur 1 gut zu sehen ist, im Wesentlichen fast bis auf eine Sohle des Absetzraums 6 in das Innere des Absetzabschnitts 20, 30, 40 hinein. Die Außenwand des in den Absetzraum 6 hineinragenden Aufsatzes 21 weist gegenüber der scheibenförmigen Wandung am axialen Ende des Absetzabschnitts 20, 30, 40 einen Abstand von ca. 100 mm auf. Das in den Absetzraum 6 hineinragende Ende des ersten Aufsatzes 21 ist in einem Winkel von 50° gegenüber der Längsachse des Aufsatzes 21 abgeschrägt, so dass eine Einlauföffnung bzw. Flüssigkeitseintrittsöffnung 35, durch welche die Flüssigkeit in den Absetzraum 6 eintritt, einen ovalen Umriss aufweist.

Die Flüssigkeitseintrittsöffnung 35 ist dem linken, verschlossenen Ende sowie dem Boden des Absetzabschnitts 20, 30, 40, wie in Figur 1 gezeigt wird, zugewandt, so dass eine in den Absetzraum 6 eintretende Flüssigkeit in den linken, unteren Eckbereich des Absetzraums 6 strömt und beruhigt wird.

Die Zulaufeinrichtung 22 ist dem ersten Aufsatz 21 - in Figur 1 links zu sehen - zugeordnet. Sie umfasst einen im Wesentlichen zylindrischen Körper 22a, der koaxial zur Längsachse des Aufsatzes 22 um 360° um dieselbe drehbar und vorzugsweise radial außerhalb des Aufsatzes 22 angeordnet ist, als auch einen sich senkrecht zum drehbaren zylindrischen Körper 22a erstreckenden, zylindrischen Anschlussstutzen 22b. Die Zulaufeinrichtung 22 ist fluiddicht gegenüber dem Aufsatz 21 abgedichtet. In der Wand des ersten Aufsatzes 21 ist radial innerhalb des drehbaren zylindrischen Körpers 22a zumindest eine Öffnung 22b vorgesehen, durch welche eine Flüssigkeit eintreten kann.

Die Ablaufeinrichtung 32 ist dem zweiten Aufsatz 31 - in Figur 1 rechts zu sehen - zugeordnet. Sie umfasst einen im Wesentlichen zylindrischen Körper 32a, der koaxial zur Längsachse des Aufsatzes 31 um 360° um dieselbe drehbar und vorzugsweise radial außerhalb des Aufsatzes 31 angeordnet ist, als auch einen sich senkrecht zum drehbaren zylindrischen Körper 32a erstreckenden, zylindrischen Anschlussstutzen 32b. Die Ablaufeinrichtung 32 ist fluiddicht gegenüber dem Aufsatz 31 abgedichtet. In der Wand des zweiten Aufsatzes 31 ist, radial innerhalb des drehbaren zylindrischen Körpers 32a, zumindest eine Öffnung 32b vorgesehen, durch welche eine Flüssigkeit austreten kann. Die Ablaufeinrichtung 32 ist vorzugsweise in vertikaler Richtung unterhalb der Zulaufeinrichtung 22 angeordnet, oder wie in Figur 1 gezeigt wird, in etwa auf gleicher Höhe wie die Zulaufeinrichtung 22 positioniert.

Als Sohle des Absetzraums 6 wird im Rahmen dieser Beschreibung eine horizontale, d.h. senkrecht zur Wirkungsrichtung der Gewichtskraft G verlaufende, Ebene bezeichnet, welche den tiefsten Punkt des Absetzraums 6 umfasst. In diesem Fall schließt die Sohle des Absetzraums 6 den Boden des Wellrohres des Absetzabschnitts 20, 30, 40 mit ein. Bei bestimmungsgemäßem Einbau der Sedimentationsanlage 1 verläuft der Rohrboden im Wesentlichen horizontal und vorzugsweise parallel zum Erdboden B.

Vom Boden des Absetzabschnitts 20, 30, 40 steht eine erste Tauchwand 27 im Wesentlichen senkrecht zur Sohle in das Innere des Absetzraums 6 hervor, wie in Figuren 1 und 2 gut zu erkennen ist. Die erste Tauchwand 27 ist in einem Abstand von ca. 550 mm von der in Figur 1 linken Wand des Absetzabschnitts 20, 30, 40 im Wesentlichen parallel dazu angeordnet. Die Oberkante 27a der Tauchwand 27 verläuft im Wesentlichen horizontal und befindet sich in einer Höhe von vorzugsweise 10% bis 30%, bevorzugt 20%, der maßgeblichen Innenhöhe des Absetzabschnitts 20, 30, 40, d.h. etwa 200 mm über einem Fußpunkt 27b der ersten Tauchwand 27. Die maßgebliche Innenhöhe ist dabei die Innenhöhe vertikal über dem Fußpunkt 27b der ersten Tauchwand 27. Die erste Tauchwand 27 dient der Beruhigung einer in den Absetzraum 6 eingeleiteten Flüssigkeit und bildet eine erste Vorreinigungsstufe innerhalb des Absetzraums 6 der Sedimentationsanlage 1.

Von der Decke des Absetzabschnitts 20, 30, 40 steht eine zweite Tauchwand 37 im Wesentlichen senkrecht zur Sohle in das Innere des Absetzraums 6 hervor. Die zweite Tauchwand 37 ist in einem Abstand von ca. 550 mm von der in Figur 1 rechten Wand des Absetzabschnitts 20, 30, 40 im Wesentlichen parallel dazu angeordnet. Die Unterkante 37a der Tauchwand 37 verläuft im Wesentlichen horizontal und befindet sich in einer Höhe von vorzugsweise 40% bis 60%, bevorzugt 50%, der maximalen Innenhöhe des Absetzabschnitts 20, 30, 40, z.B. etwa 480 mm unterhalb eines Scheitelpunkts 37b der zweiten Tauchwand 37. Die maßgebliche Innenhöhe ist dabei die Innenhöhe vertikal unter dem Scheitelpunkt 37b der zweiten Tauchwand 37. Die zweite Tauchwand 37 weist in der Nähe ihres Scheitelpunkt 37b eine Entlüftungsöffnung 37c auf, von der eine Entlüftungsleitung 38 wegführt, die im Wesentlichen innerhalb des zweiten Aufsatzes 31 des Endteils 3 verläuft und welche die von einer im Absetzraum 6 ansteigenden Flüssigkeit verdrängte Luft nach außen abführt. Die Schachtabdeckung 36 ist luftdurchlässig. Alternativ oder zusätzlich kann der erste Aufsatz 21 im deckennahen Bereich des Absetzraums 6 eine Entlüftungsöffnung aufweisen, durch welche die von einer im Absetzraum 6 ansteigenden Flüssigkeit verdrängte Luft nach außen abgeführt werden kann. Vorzugsweise hat die Entlüftungsöffnung einen Durchmesser von ca. 10 mm. Auf die Entlüftungsöffnung 37a in der zweiten Tauchwand 37 und die Entlüftungsleitung 38 kann dann verzichtet werden. Die Schachtabdeckung 26 ist luftdurchlässig.

Die Sedimentationsanlage 1 kann in einem besonders bevorzugten Ausführungsbeispiel der Erfindung als Bausatz gestaltet sein, um besser transportieren werden zu können und individuellen Bedürfnissen besser angepasst werden zu können.

Der Bausatz umfasst ein Kopfteil 2, welchem die Zulaufeinrichtung 32 zugeordnet ist, ein Endteil 3, welchem die Ablaufeinrichtung 32 zugeordnet ist, und ein mit dem Kopfteil 2 und dem Endteil 3 über Muffen 5 verbindbares Mittelteil 4. Das Mittelteil 4 des den Absetzabschnitt 20, 30, 40 bildenden Wellrohres ist austauschbar. Das Volumen der Sedimentationsanlage 1 ist durch Bereitstellen von Mittelteilen 4 mit unterschiedlichen axialen Längen sehr einfach an individuelle Bedürfnisse anpassbar ist. Je nach verwendetem Mittelteil 4 kann die Sedimentationsanlage 1 eine Gesamtlänge zwischen 3.000 mm und 12.000 mm aufweisen.

Nachstehend werden bevorzugte Merkmale der Installation der erfindungsgemäßen Sedimentationsanlage 1 mit Bezug auf Figur 1 beschrieben.

Für die bestimmungsgemäße Verwendung wird die das Kopfteil 2, das Endteil 3 und das Mittelteil 4 umfassende Sedimentationsanlage 1 in der in Figur 1 gezeigten Art unter Verwendung der Muffen 5 zusammengesetzt. Für die vorgesehene Anwendung wird die Sedimentationsanlage 1 in einer Weise unterirdisch verlegt, dass die Längsachse des Absetzraums 6 im Wesentlichen horizontal verläuft und die Längsachsen der Aufsätze 21, 31 bzw. die Drehachsen der Zulaufeinrichtung 22 und der Ablaufeinrichtung 32 vertikal und parallel zueinander angeordnet sind. Die Schnittansicht in Figur 1 schneidet die Längsachsen der Aufsätze 21 und 31 sowie die Längsachse des Absetzabschnitts 20, 30 und 40.

Um die Sedimentationsanlage 1 an vor- und nachgeschalteten Anlagen (nicht gezeigt) anzuschließen, wird die Zulaufeinrichtung 22 bzw. die Ablaufeinrichtung 32 auf die jeweiligen Anschlüsse ausgerichtet. Sowohl die Zulaufeinrichtung 22 als auch die Ablaufeinrichtung 32 ist drehbar an einem der Aufsätze 21, 31 angeordnet und kann um 360° um die jeweilige Drehachse gedreht werden. Über entsprechende Rohrverbindungen wird die Zulaufeinrichtung 22 mit einem Anschluss einer vorgeschalteten Anlage, und die Ablaufeinrichtung 32 mit einem Anschluss einer nachgeschalteten Anlage dauerhaft und fluiddicht verbunden.

Die Funktion und insbesondere die Erstbefüllung der bereits installierten, erfindungsgemäßen Sedimentationsanlage 1 wird nachstehend beschrieben. Im normalen Betrieb befindet sich die Sedimentationsanlage 1 im Dauerstau und der Absetzraum 6 ist vollständig gefüllt. Nur akkumulierte Luftblasen werden dann durch die Entlüftung entgast.

Durch die drehbare Zulaufeinrichtung 22 wird eine Flüssigkeit, z.B. Regenwasser aus dem Dachablauf eines Wohnhauses, in die Sedimentationsanlage 1 eingeleitet. Die Flüssigkeit tritt über die Flüssigkeitseintrittsöffnung 25 am unteren Ende des Aufsatzes 21 in das Innere des Absetzraums 6 ein. Durch die erste Tauchwand 27 wird ein in den Absetzraum 6 eintretender Fluidstrom beruhigt und ein erster Abscheideraum geschaffen, in welchem bereits grobe, in der Flüssigkeit enthaltene absetzbare Stoffe abgesetzt werden. Bei entsprechender Stauhöhe läuft die durch die erste Tauchwand 27 im ersten Abscheideraum zurückgehaltene Flüssigkeit über die Oberkante 27a der Tauchwand über und verteilt sich entsprechend in dem restlichen Absetzraum 6, während grobe Sedimente im Abscheideraum links der ersten Tauchwand 27 und unterhalb des Aufsatzes 21 zurückbleiben. Bei weiter zunehmendem und steigendem Fluidpegel erreicht die Flüssigkeit die Unterkante 37a der zweiten Tauchwand 37. Die Tauchwand 37, die ebenso zur Beruhigung der in den Absetzraum 6 eingeleiteten Flüssigkeit dient, verhindert, dass eventuell aufgewirbelte Schwebstoffe durch die Flüssigkeitseintrittsöffnung 35 bzw. die Ablaufeinrichtung 32 im Wesentlichen ungehindert aus der Sedimentationsanlage 1 austreten. Die Flüssigkeitseintrittsöffnung 25 befindet sich zu diesem Zeitpunkt bereits vollständig unterhalb des Fluidpegels. Die im Absetzraum 6 links oberhalb der Unterkante der zweiten Tauchwand 37 vorhandene Luft wird bei steigendem Fluidpegel verdrängt. Die verdrängte Luft kann durch die Entlüftungsöffnung 37c nahe des Scheitelpunkts 37b der zweiten Tauchwand 37 und die sich ausgehend von der Entlüftungsöffnung 37c durch den zweiten Aufsatz 31 bis in eine Höhe oberhalb der Ablaufeinrichtung 32 erstreckende Entlüftungsleitung 38 entweichen. Das obere Ende der Entlüftungsleitung 38 befindet sich immer oberhalb des Fluidpegels. Bei der alternativen Ausführungsform der erfindungsgemäßen Sedimentationsanlage 1 kann die verdrängte Luft durch die Entlüftungsöffnung im ersten Aufsatzes 21 im Bereich der Decke des Absetzraums 6, und durch den Aufsatz 21 selbst, entweichen.

Zur Reinigung der Sedimentationsanlage 1, insbesondere des Absetzraums 6, ist das Innere des Absetzraums 6 über die Aufsätze 21 bzw. 31 zugänglich. Dazu können die Schachtabdeckungen 26, 36 und eventuell vorhandene Siebeinrichtungen, z.B. Schlammeimer oder dgl., abgehoben werden. Zum Reinigen des Absetzraums 6 wird eine Reinigungsflüssigkeit unter Hochdruck in den Absetzraum 6 eingeleitet, um abgesetzte Schwebstoffe aufzuwirbeln. Die aufgewirbelten Schwebstoffe werden über eine entsprechende Saugvorrichtung mitsamt der Reinigungsflüssigkeit abgesaugt.

## Patentansprüche

1. Sedimentationsanlage (1) zum Absetzen von in Flüssigkeiten enthaltenen, absetzbaren Stoffen, umfassend: einen vorzugsweise unterirdisch zu verlegenden Sedimentationskörper (2, 3, 4), der einen Absetzraum (6) definiert, zumindest eine Zulaufeinrichtung (22), durch welche eine Flüssigkeit in den Absetzraum (6) einleitbar ist, zumindest eine Ablaufeinrichtung (32), durch welche die Flüssigkeit wieder aus dem Absetzraum (6) ausleitbar ist, **dadurch gekennzeichnet, dass** die Zulaufeinrichtung (22) und/oder die Ablaufeinrichtung (32) gegenüber dem Sedimentationskörper (2, 3, 4) bewegbar ist.

2. Sedimentationsanlage (1) nach Anspruch 1, **dadurch gekennzeichnet, dass** die Zulaufeinrichtung (22) und/oder die Ablaufeinrichtung (32) drehbar am Sedimentationskörper (2, 3, 4) angeordnet ist.

3. Sedimentationsanlage (1) nach einem der vorangegangenen Ansprüche, **dadurch gekennzeichnet, dass** die Zulaufeinrichtung (22) und/oder die Ablaufeinrichtung (32) um 360° drehbar ist.

4. Sedimentationsanlage (1) nach einem der vorangegangenen Ansprüche, **dadurch gekennzeichnet, dass** die Drehachsen der Zulaufeinrichtung (22) und der Ablaufeinrichtung (32) im Wesentlichen parallel zueinander verlaufen.

5. Sedimentationsanlage (1) nach einem der vorangegangenen Ansprüche, **dadurch gekennzeichnet, dass** der Sedimentationskörper (2, 3, 4) zumindest einen, den Absetzraum (6) umgebenden Absetzabschnitt (20, 30, 40) und zumindest einen gegenüber dem Absetzabschnitt (20, 30, 40) nach außen hervorstehenden Aufsatz (21, 31) aufweist.

6. Sedimentationsanlage (1) nach einem der vorangegangenen Ansprüche, **dadurch gekennzeichnet, dass** der Aufsatz (21, 31) in das Innere des Absetzabschnitts (20, 30, 40) hineinragt.

7. Sedimentationsanlage (1) nach einem der vorangegangenen Ansprüche, **dadurch gekennzeichnet, dass** die Zulaufeinrichtung (22) drehbar an einem ersten Aufsatz (21) des Sedimentationskörpers (2, 3, 4) angeordnet ist.

8. Sedimentationsanlage (1) nach einem der vorangegangenen Ansprüche, **dadurch gekennzeichnet, dass** die Ablaufeinrichtung (32) drehbar an einem zweiten Aufsatz (31) des Sedimentationskörpers (2, 3, 4) angeordnet ist.

9. Sedimentationsanlage (1) nach einem der vorangegangenen Ansprüche, **dadurch gekennzeichnet, dass** der Sedimentationskörper (2, 3, 4) zumindest eine erste Tauchwand (27) aufweist, die sich von einem Boden des Absetzraumes (6) in den Absetzraum (6) hinein erstreckt.

10. Sedimentationsanlage (1) nach einem der vorangegangenen Ansprüche, **dadurch gekennzeichnet, dass** eine Oberkante (27a) der ersten Tauchwand (27) auf einer Höhe von vorzugsweise 10% bis 30%, bevorzugt 20%, der Innenhöhe des Absetzraumes (6) liegt.

11. Sedimentationsanlage (1) nach einem der vorangegangenen Ansprüche, **dadurch gekennzeichnet, dass** der Sedimentationskörper (2, 3, 4) zumindest eine zweite Tauchwand (37) aufweist, die sich von einer Decke des Absetzraumes (6) in den Absetzraum (6) hinein erstreckt.

12. Sedimentationsanlage (1) nach einem der vorangegangenen Ansprüche, **dadurch gekennzeichnet, dass** eine Unterkante (37a) der zweiten Tauchwand (37) auf einer Höhe von vorzugsweise 40% bis 60%, bevorzugt 50%, der Innenhöhe des Absetzraumes (6) liegt.

13. Sedimentationsanlage (1) nach einem der vorangegangenen Ansprüche, **dadurch gekennzeichnet, dass** sich die erste Tauchwand (27) und/oder die zweite Tauchwand (37) im Wesentlichen senkrecht zu einer Sohle des Absetzraumes (6) in den Absetzraum (6) hinein erstreckt.

14. Sedimentationsanlage (1) nach einem der vorangegangenen Ansprüche, **dadurch gekennzeichnet, dass** die erste Tauchwand (27) und/oder die zweite Tauchwand (37) in einer Fließrichtung der Flüssigkeit durch die Sedimentationsanlage (1) zwischen einer Einlauföffnung, durch welche die Flüssigkeit in den Absetzraum (6) eintritt und einer Auslauföffnung, durch welche die Flüssigkeit aus dem Absetzraum (6) austritt, angeordnet ist.

15. Sedimentationsanlage (1) nach einem der vorangegangenen Ansprüche, **dadurch gekennzeichnet, dass** der Absetzabschnitt (20, 30, 40) eine rohrförmige Struktur aufweist.

16. Sedimentationsanlage (1) nach einem der vorangegangenen Ansprüche, **dadurch gekennzeichnet, dass** der Absetzabschnitt (20, 30, 40) ein Wellrohr aufweist.

17. Sedimentationsanlage (1) nach einem der vorangegangenen Ansprüche, **dadurch gekennzeichnet, dass** der zumindest eine Aufsatz (21, 31) eine rohrförmige Struktur aufweist.

18. Sedimentationsanlage (1) nach einem der vorangegangenen Ansprüche, **dadurch gekennzeichnet, dass** eine Innenquerschnittsfläche des Aufsatzes (21, 31) vorzugsweise 20% bis 30%, bevorzugt 25%, einer Innenquerschnittsfläche des Absetzabschnitts (20, 30, 40) beträgt.

19. Sedimentationsanlage (1) nach einem der vorangegangenen Ansprüche, **dadurch gekennzeichnet, dass** ein Durchmesser eines den Aufsatz (21, 31) bildenden Rohres vorzugsweise 25% bis 50%, bevorzugt 50%, des Durchmessers eines den Absetzabschnitt (20, 30, 40) bildenden Rohres beträgt.

20. Sedimentationsanlage (1) nach einem der vorangegangenen Ansprüche, **dadurch gekennzeichnet, dass** die Sedimentationsanlage (1) eine Entlüftungsleitung (38) umfasst, die sich, ausgehend von einer Entlüftungsöffnung (37c), in der zweiten Tauchwand (37) im Wesentlichen innerhalb des zweiten Aufsatzes (31) erstreckt.

21. Sedimentationsanlage (1) nach einem der vorangegangenen Ansprüche, **dadurch gekennzeichnet, dass** die Sedimentationsanlage (1) eine Entlüftungsöffnung umfasst, die sich im deckennahen Bereich des Absetzraumes (6) im Aufsatz (21) befindet.

22. Sedimentationsanlage (1) nach einem der vorangegangenen Ansprüche, **dadurch gekennzeichnet, dass** der Sedimentationskörper (2, 3, 4) im Wesentlichen aus Kunststoff, vorzugsweise Polyolefin, bevorzugt Polypropylen oder Polyethylen, besteht.

23. Bausatz für eine Sedimentationsanlage (1) nach einem der vorangegangenen Ansprüche, umfassend ein Kopfteil (2), ein Endteil (3) und ein Mittelteil (4), welches mit dem Kopfteil (2) und dem Endteil (4) verbindbar ist, um den Sedimentationskörper (2, 3, 4) zu bilden.

24. Bausatz für eine Sedimentationsanlage (1) nach Anspruch 23, **dadurch gekennzeichnet, dass** die Zulaufeinrichtung (22) dem Kopfteil (2) zugeordnet ist und die Ablaufeinrichtung (32) dem Endteil (3) zugeordnet ist.
